# EUROPEAN PATENT APPLICATION

(11) **EP 2 990 955 A1**
(43) Date of publication of application: **02.03.2016**
(21) Application number: 13883151.6
(22) Date of filing: 07.11.2013
(51) Int. Cl.: G06F 13/00, G06F 3/048, H04M 1/00

(54) **PROGRAM, INFORMATION PROCESSING TERMINAL, AND INFORMATION PROCESSING METHOD**

(30) Priority: 26.04.2013 JP 2013094339
(71) Applicant: KPI Solutions Co., Ltd., Chuo-ku, Tokyo 104-0061 (JP)
(72) Inventor: ISHIDA, Tetsuro, Tokyo 108-0023 (JP)
(74) Representative: Cabinet Plasseraud
(86) International application number: PCT/JP2013/080143
(87) International publication number: WO 2014/174709

(57) **Abstract**

There are provided a program, an information processing terminal, and an information processing method capable of providing various message display functions. The program includes: a message sending/receiving section 410 for receiving a message transmitted from another information processing terminal and in which a display location is set; a location acquisition section 450 capable of acquiring current location information indicative of the current location; and a popup display section 430 which, when the current location information corresponds to the display location set in the message, displays the message on a display unit.

## Description

### Technical Field

Some aspects of the present invention relate to a program, an information processing terminal, and an information processing method.

### Background Art

With the recent widespread use of mobile phones and the like, various messages have been exchanged between individuals. For example,

Patent Document 1 discloses a message switching terminal that enables the switching of messages by text, sound, video, etc.

### Citation List

### Patent Document

Patent Document 1: JP 2008-070994 A

### Disclosure of the Invention

### Problem to be Solved by the Invention

With the development of media sites and social networks after the commercialization of the Internet in the late 1990s, individuals have received vast amounts of global information. While this has improved convenience, everyday interpersonal communication has been fading.

The amount of information received in people's social life has been rapidly increasing in recent years. Since vast amounts of information are delivered regardless of the urgency and importance of information, and the priority, level, and urgency of the relationship with a communication partner, a problem arises that makes it difficult for people to get really-required information due to the loss of information when one needs it. In other words, there is a need to prepare a mechanism capable of delivering a desired form of information to a person in need when the person needs it. Here, examples of really-required information and urgent information include the notice of a time such as to "take medicine at ○× o'clock every day," and the confirmation of the safety of family members in the event of an emergency.

In the meantime, a mobile phone is a portable terminal carried by a user all the time, and has various functions, such as a location information acquiring function using GPS (Global Positioning System) and a time-keeping function, in addition to the communication function. Therefore, if linkages with these functions are provided, a more variety of message display functions can be realized.

Some aspects of the present invention have been made in view of the problem mentioned above, and it is one object of the present invention to provide a program, an information processing terminal, and an information processing method capable of providing various message display functions. Means for Solving the Problem

The program according to the present invention is a program for causing an information processing terminal to execute: a reception function for receiving a message transmitted from another information processing terminal and in which a display location is set; a first acquisition function capable of acquiring current location information indicative of the current location; and a display control function for displaying the message on a display unit when the current location information corresponds to the display location set in the message.

The information processing terminal according to the present invention includes: reception means for receiving a message transmitted from another information processing terminal and in which a display location is set; acquisition means capable of acquiring current location information indicative of the current location, and display control means for displaying the message on a display unit when the current location information corresponds to the display location set in the message.

The information processing method according to the present invention causes an information processing terminal to execute: a reception step of receiving a message transmitted from another information processing terminal and in which a display location is set; a step of acquiring current location information indicative of the current location; and a step of displaying the message on a display unit when the current location information corresponds to the display location set in the message.

In the present invention, the terms "unit" or "means," "device," and "system" do not merely mean physical means, and include a case where the function of the "unit" or "means," "device," or "system" is implemented by software. Further, the function of one "unit" or "means," "device," or "system" may be implemented by two or more physical means or devices, or the functions of two or more "units" or "means," "devices," or "systems" may be implemented by one physical means or device.

### Effect of the Invention

According to the present invention, there can be provided a program, an information processing terminal, and an information processing method capable of providing various message display functions.

### Brief Description of the Drawings

FIG. 1 is a diagram illustrating an outline of a communication system in which information processing terminals according to an embodiment of the present invention are used.
FIG. 2A is a diagram illustrating a specific example of a display screen displayed on the information processing terminal illustrated in FIG. 1.
FIG. 2B is a diagram illustrating another specific example of the display screen displayed on the information processing terminal illustrated in FIG. 1.
FIG. 2C is a diagram illustrating still another specific example of the display screen displayed on the information processing terminal illustrated in FIG. 1.
FIG. 3 is a diagram illustrating a specific example of a display screen displayed on the information processing terminal illustrated in FIG. 1.
FIG. 4 is a diagram illustrating a specific example of the hardware configuration of the information processing terminal illustrated in FIG. 1.
FIG. 5 is a block diagram illustrating a functional configuration of an application on the information processing terminal illustrated in FIG. 1.
FIG. 6 is a flowchart illustrating a flow of processing performed by the information processing terminal illustrated in FIG. 1.

### Mode for Carrying out the Invention

An embodiment of the present invention will be described below. Note that the same or similar elements in the following description and the drawings to be referred to are given the same or similar reference numerals.

### (Embodiment)

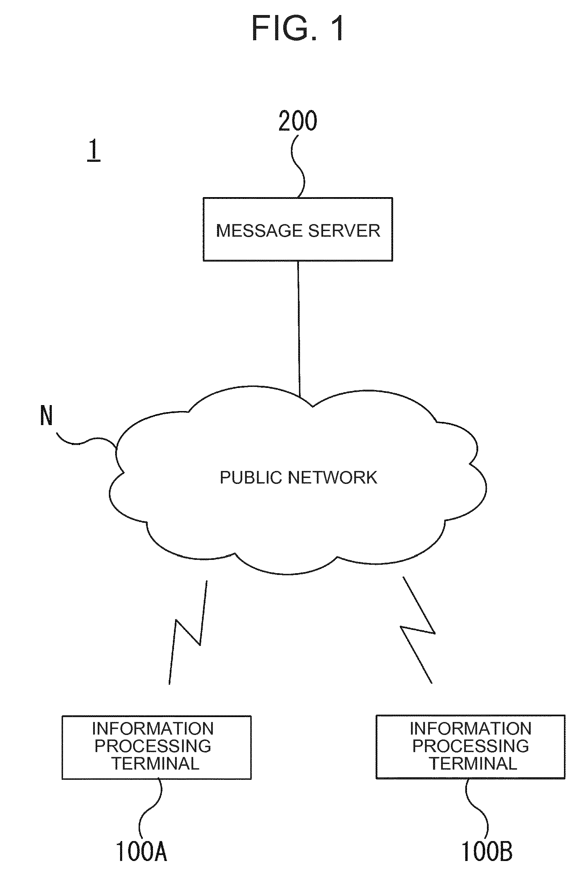

FIG. 1 to FIG. 6 are diagrams for describing an embodiment. The embodiment will be described below with reference to these diagrams along the following flow: First, an outline of the embodiment will be described while illustrating specific examples of display screens in "section 1." Next, a specific example of a hardware configuration capable of implementing an information processing terminal will be illustrated in "section 2." In section "3," a functional configuration of an application running on the information processing terminal will be described. In "section 4," a flow of processing will be described. Finally, the effect of the embodiment will be described in section "5."

### (1. Outline)

### (1.1. System Outline)

FIG. 1 is a diagram illustrating a schematic configuration of a communication system 1 including information processing terminals according to the embodiment. As illustrated in FIG. 1, the communication system 1 includes information processing terminals 100A and 100B (the information processing terminals 100A and 100B are collectively called the information processing terminal(s) 100 below), and a message server 200.

The information processing terminals 100 are terminals capable of exchanging messages with each other through a public network N and the message server 200. A specific example of the information processing terminal 100 can be a mobile phone or the like called a smartphone. In the example of FIG. 1, only two information processing terminals 100 are illustrated, but the information processing terminals 100 can, of course, be three or more information processing terminals 100.

The message server 200 is a server for mediating the exchange of a message between the information processing terminals 100. The message server 200 transmits the message to the information processing terminal 100 to which an identifier (e.g., including an address and the like) designated in the message is given.

Here, the information processing terminal 100 according to the embodiment can add various settings to a message when transmitting the message. For example, location information (information on latitude, longitude, attitude, and radius from the center of a designated place) about a location at which the message is to be displayed to a receiving-side user, the time of displaying the message, such as what time the message is to be displayed, an alarm method, such as in what way the display of the message is to be alarmed to the user, and the like can be set in the message. Thus, various message display functions can be provided. As a more specific example, if a text message "Don't forget to take medicine!" displayed during a lunch break at the receiving-side user's place of employment (the setting of a display time) or when the user comes back home (the setting of a display location) is transmitted in advance, it is possible to prevent the receiving-side user from forgetting to take the medicine.

Further, even when a lock screen is set on the information processing terminal 100 according to the embodiment, since a message from an important sender such as a family member is displayed on the lock screen, it is also possible to prevent the receiving-side user from forgetting to check the message on this point.

In other words, the time and place at which information is required, and the person(s) (including the sender oneself) for which the information is required are designated so that suitable message display control can be performed according to the level of information communication (including the importance of information /the importance of the sender), i.e., a mechanism capable of delivering message information in a way desired by people can be realized.

### (1.2. Specific Example of Display Screen)

### (1.2.1. Specific Example of Transmission Screen)

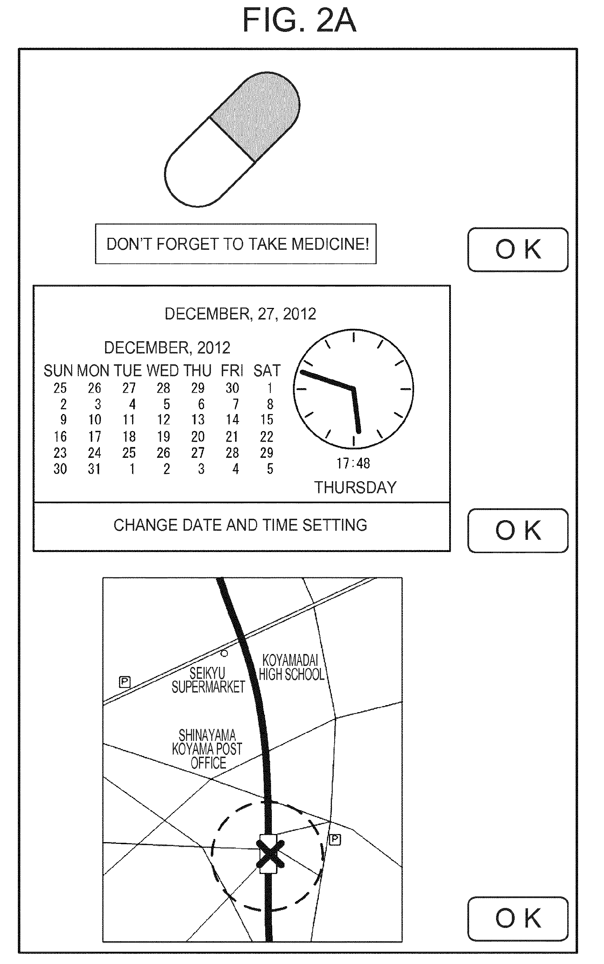

For example, various settings other than the setting of text data can be configured in a message communicated from the information processing terminal 100 according to the embodiment in order to display the message appropriately on the receiving-side information processing terminal 100. FIG. 2A to FIG. 2C are diagrams illustrating specific examples of setting screens with various settings added to a message by the transmitting-side information processing terminal 100.

In the example of FIG. 2A, the information processing terminal 100 can set an image and text to be displayed on a display unit of the receiving-side information processing terminal 100, the date and time on which the message is to be displayed, and the location (including information on latitude, longitude, altitude, radius from the center of a designated place, and the like) at which the message is to be displayed. Among them, the display image can be selected, for example, from an image group prepared in advance. The display date and time can be set by using a calendar and a clock. The message display location can be set in a way, for example, that the user designates the location on a map. However, the setting methods are not limited to these examples.

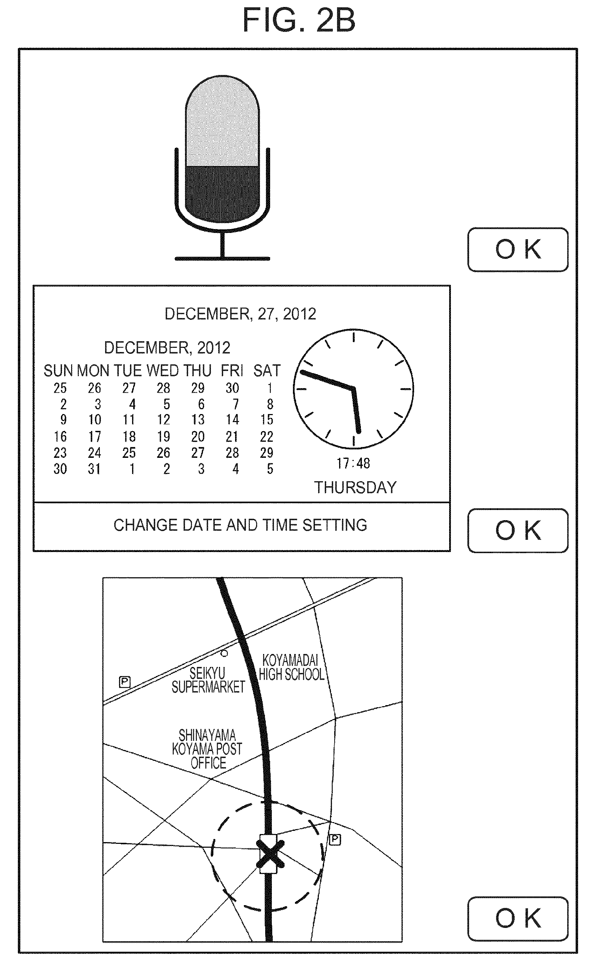

On the screen in FIG. 2B, a microphone image is displayed instead of the image and text data on the display screen in FIG. 2A. This microphone image is an icon image for allowing the user to input a voice message. The transmitting-side user can select the microphone image to input a voice message in order to allow the receiving-side user to listen thereto.

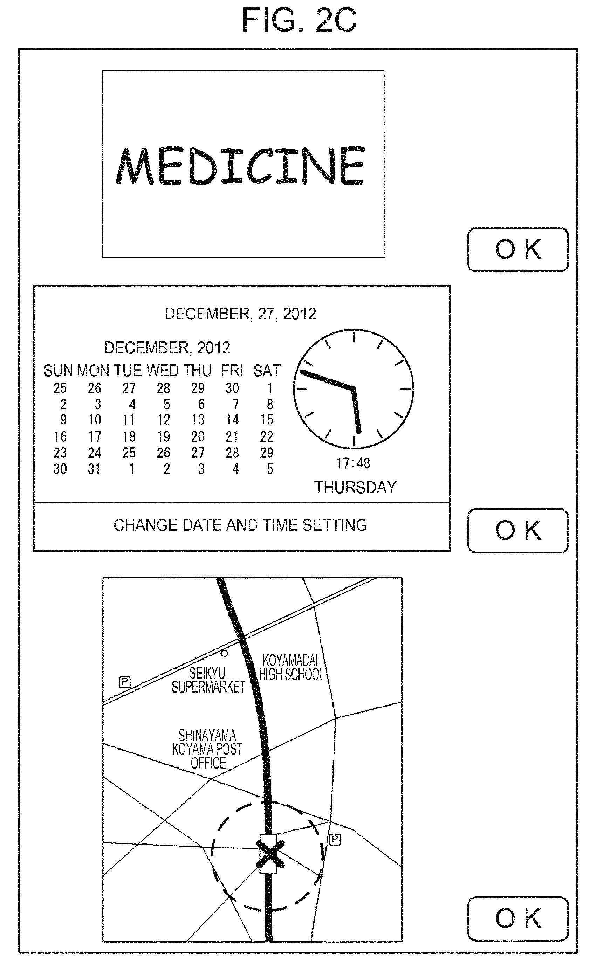

On the screen in FIG. 2C, an input area for allowing the user to input a handwritten message is displayed instead of the image and text data on the display screen in FIG. 2A. The transmitting-side user can write a message or draw a picture in the input area by hand (in the example of FIG. 2C, a word "medicine" is handwritten) so that the message or the picture can be displayed to the receiving-side user.

Though not illustrated in the specific examples of FIG. 2A to FIG. 2C, the transmitting-side information processing terminal 100 can set the designation of an alarm method (alarm sound, a pattern of vibration, or the like to give an alarm of the display of a message) on the display-side information processing terminal 100.

### (1.2.2. Specific Example of Reception Screen)

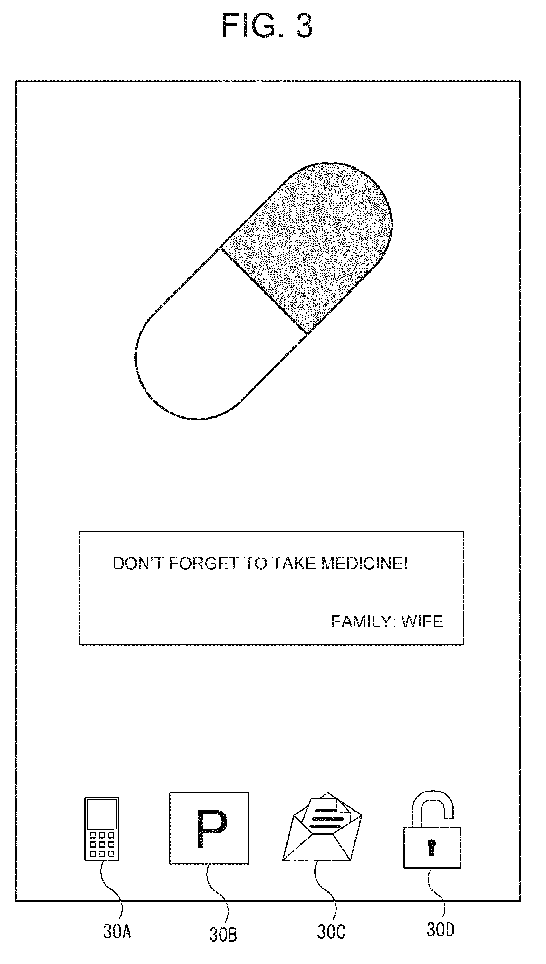

Referring next to FIG. 3, description will be made about what message is displayed on the receiving-side information processing terminal 100.

FIG. 3 is a diagram illustrating a specific example of a display screen displayed on the receiving-side information processing terminal 100.

When the time and/or the location substantially correspond to those set in a message on the transmitting-side information processing terminal 100, the message is displayed on the screen illustrated as the specific example in FIG. 3 on the receiving-side information processing terminal 100. Note that the message is displayed on a lock screen. In other words, even when the lock screen is set on the information processing terminal 100, the user can check this message without entering a password or the like to cancel the lock.

In the specific example of FIG. 3, various icons 30A to 30D to link up with other applications are displayed together with an image of medicine, text data saying "Don't forget to take medicine!", and a character string of "Family: Wife" indicative of the sender. Among them, the image, the text data, and information on the sender are included in the message transmit from the transmitting-side information processing terminal 100.

As mentioned above, the icons 30A to 30D are to provide functional linkages. More specifically, the icon 30A is to provide the function of placing a phone call to the message sender, the icon 30B is to run an application for sending or receiving a message, the icon 30C is to provide the function of sending (sending back) a message to the message sender, and the icon 30D is to cancel the lock function provided by an OS.

Particularly, since the icons 30A to 30C are able to provide various functions without a need for the user to enter a password or the like in order to cancel the lock, it is possible to improve the convenience of the receiving-side user.

In this case, it is also considered that senders (transmitting-side users) to be displayed even on the lock screen are separated from senders (transmitting-side users) to be not displayed on the lock screen depending on the settings by the receiving-side user. This control can lead to such usage that a message the confidential of which is low, such as from a family member, can be checked without canceling the lock screen, and that a highly-confidential message from the place of employment or the like cannot be checked unless the lock screen is canceled.

In addition, the notification location and notification time slot of a message that can be checked without canceling the lock screen can be set concurrently with the settings of the transmitting-side users.

### (2. Hardware Configuration)

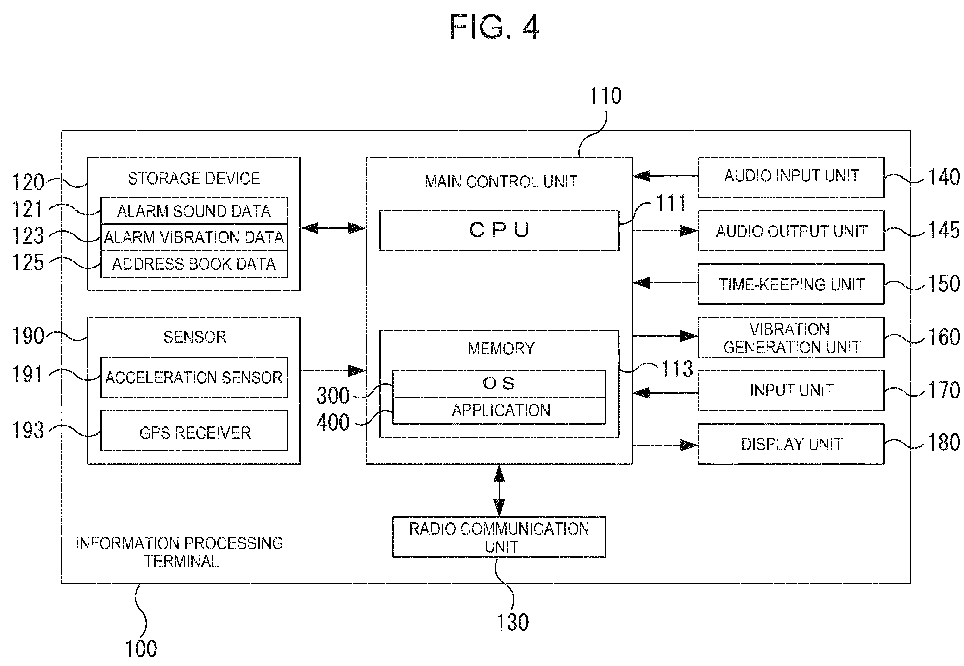

Referring to FIG. 4, a specific example of the hardware configuration of the information processing terminal 100 according to the embodiment will be described below. FIG. 4 is a diagram illustrating a specific example of the hardware configuration of the information processing terminal 100 according to the embodiment. As illustrated in FIG. 4, the information processing terminal 100 includes a main control unit 110, a storage device 120, a radio communication unit 130, an audio input unit 140, an audio output unit 145, a time-keeping unit 150, a vibration generation unit 160, an input unit 170, a display unit 180, and a sensor 190.

The main control unit 110 controls various processes on the information processing terminal 100, and includes a CPU (Central Processing Unit) 111 and a memory 113 (including a volatile memory and a nonvolatile memory). The main control unit 110 can store various programs, such as an application 400 and the like, in storage areas of the memory 113 and have the CPU 111 execute programs such as the application 400 and an OS (operating system) 300 to implement various functions on the information processing terminal 100. The display screen whose specific example is illustrated in any one of FIG. 2 and FIG. 3 is displayed by the function of the application 400 executed on the OS 300.

The storage device 120 is composed of a non-volatile storage medium such as a flash memory. The storage device 120 stores alarm sound data 121, alarm vibration data 123, address book data 125, and the like.

The alarm sound data 121 is, for example, data related to a sound pattern (a so-called ringtone) used to notify the user of the arrival of a message or an incoming voice call from the transmitting-side information processing terminal 100. The sound based on the alarm sound data 121 is output from the audio output unit 145.

Like the alarm sound data 121, the alarm vibration data 123 is data related to a pattern of vibration used to notify the user of the arrival of a message or an incoming voice call from the transmitting-side information processing terminal 100. The vibration based on the alarm vibration data 123 is output by the vibration generation unit 160.

Here, in the communication system 1 according to the embodiment, the sound based on the alarm sound data 121 or the vibration based on the alarm vibration data 123 used to notify the user of the arrival of a message can be designated by the transmitting-side user operating the information processing terminal 100. At the time of the arrival of a message, the application 400 reads the alarm sound data 121 or the alarm vibration data 123 designated in the message, and has the audio output unit 145 output the sound or the vibration generation unit 160 generate vibration.

The address book data 125 is data for managing information related to an identifier or name for identifying a sender/receiver who sending or receiving a message using the application 400. On the display screen at the arrival of a message illustrated as a specific example in FIG. 3, information as "Family: Wife" is displayed as the sender of the message. This can be displayed in such a manner that the application 400 searches the address book data 125 using the identifier of the sender given to the message as a key to acquire a character string of "Family: Wife."

The radio communication unit 130 can exchange (communicate) message data or voice call data with another information processing terminal 100 through the public network N. More specifically, the radio communication unit 130 transmits message data to the message server 200 at the time of transmission, and receives message data from the message server 200 at the time of reception.

The audio input unit 140 is a device made up of a microphone and the like to input voice from the user at the time of a voice call or input of a voice message. At the time of input of a voice message illustrated as the specific example in FIG. 2B, the user inputs voice to the audio input unit 140.

As mentioned above, the audio output unit 145 outputs the sound to notify the user of the arrival of a message or an incoming voice call. At the time of a voice call, the audio output unit 145 can also output a call speech.

The time-keeping unit 150 is powered even when the information processing terminal 100 is powered off to count the current time. When the application 400 displays a message in which the display time is set, the application 400 refers to the time-keeping unit 150 to get the current time, and when the time matches the display time set in the message, the message display screen illustrated as the specific example in FIG. 3 is displayed on the display unit 180.

As mentioned above, at the arrival of a message or a voice call, the vibration generation unit 160 notifies the user of that effect with vibration.

The input unit 170 is a module for accepting various forms of input from the user to the information processing terminal 100 includes input keys, a touch panel, and the like. For example, user instructions on the display screens illustrated in FIG. 2A to FIG. 2C, and FIG. 3 are input from the input unit 170. Particularly, the handwritten message illustrated in FIG. 2C is input with a user operation to the input unit 170 as the touch panel, for example.

The display unit 180 is, for example, a display device for displaying a variety of information to present the information to the user. The display unit 180 displays the display screens illustrated as the specific examples in FIG. 2A to FIG. 2C, and FIG. 3.

The sensor 190 outputs detection signals that vary according to the moving state or location of the user of the information processing terminal 100. For example, the sensor 190 includes an acceleration sensor 191 and a GPS receiver 193. Specifically, the detection signals output from the sensor 190 include acceleration information output from the acceleration sensor 191, location information (lat/long information) indicative of the current location of the information processing terminal 100 output from the GPS receiver 193.

### (3. Software Configuration)

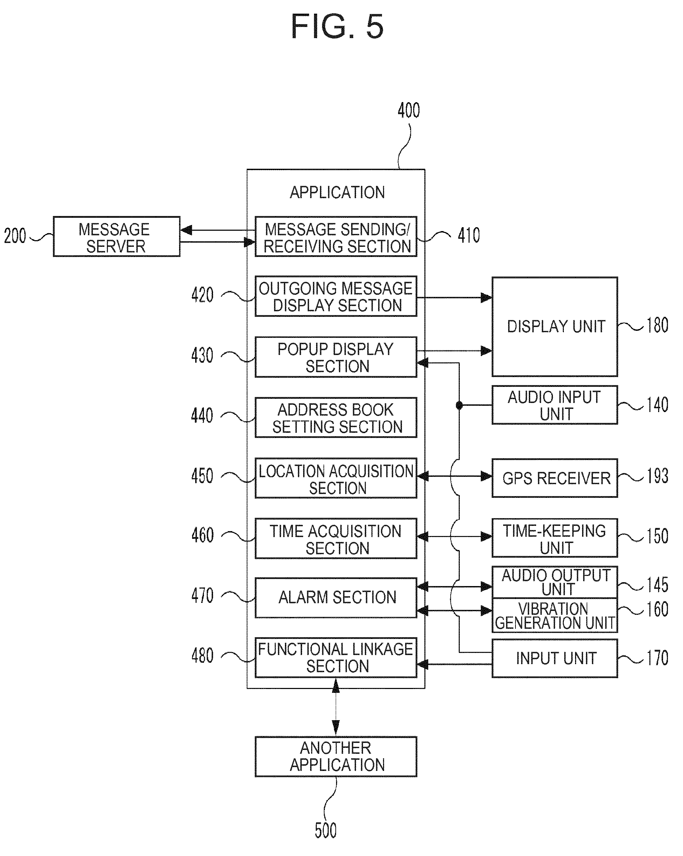

Referring next to FIG. 5, the functional configuration of the application 400 that runs on the information processing terminal 100 to exchange a message with another information processing terminal 100 will be described. FIG. 5 is a functional block diagram schematically illustrating the configuration of the application 400 that runs on the main control unit 110 of the information processing terminal 100. As illustrated in FIG. 5, the application 400 includes a message sending/receiving section 410, an outgoing message display section 420, a popup display section 430, an address book setting section 440, a location acquisition section 450, a time acquisition section 460, an alarm section 470, and a functional linkage section 480.

The message sending/receiving section 410 exchanges a message with the message server 200 through the radio communication unit 130. At the time of message transmission, the outgoing message display section 420 displays, on the display unit 180, the display screen illustrated as the specific example in FIG. 2A-FIG. 2C to set, from a user, information on text data or an image to be included in a message, the time and/or the location at which the message is displayed, the receiver, and the like so that the user as the sender can set various kinds of information. Further, during the creation of this message, the outgoing message display section 420 creates a message in response to input from the user through the input unit 170 or the audio input unit 140, and displays the message on the display unit 180.
at the time of message display, the popup display section 430 displays, on the display unit 180, a display screen as in FIG. 3 when the time and the location set in a received message match the current time and the current location. At the time of displaying this message, when the screen displayed by the OS 300 on the display unit 180 is the lock screen, the popup display section 430 displays the message on the lock screen. Since this allows the user to check the message even at locking time, it is possible to prevent the user from forgetting to check the message or the like.

The address book setting section 440 has the function of registering users as senders/receivers in the address book data 125 according to user operations. The address book setting section 440 may be able to set whether to display a message to each person registered in the address book data 125 even on the lock screen.

The location acquisition section 450 acquires current location information (lat/long information) as needed based on the GPS receiver 193. Therefore, when the display location is set in a message received in advance from another information processing terminal 100, the popup display section 430 can check whether the set display location matches the current location.

The time acquisition section 460 acquires the current time from the time-keeping unit 150 as needed. Therefore, when the display time is set in a message received in advance from another information processing terminal 100, the popup display section 430 can check whether the set display time matches the current time.

When the popup display section 430 displays a message on the display unit 180, the alarm section 470 controls the audio output unit 145 and/or the vibration generation unit 160 to output sound and/or vibration in order to notify the user that the message is displayed.

The functional linkage section 480 provides a functional linkage with another application 500 based on the operation of an icon 30 displayed on the message display screen illustrated as the specific example in FIG. 3. More specifically, for example, when the icon 30A is operated, the functional linkage section 480 refers to the address book data 125 to acquire information such as a phone number for placing a call to the sender of a message displayed on the display unit 180 in order to instruct the telephone application to place a call using the phone number. Alternatively, when the icon 30D is operated, the functional linkage section 480 has the OS 300 provide a function to cause the user to cancel the lock.

### (4. Flow of Processing)

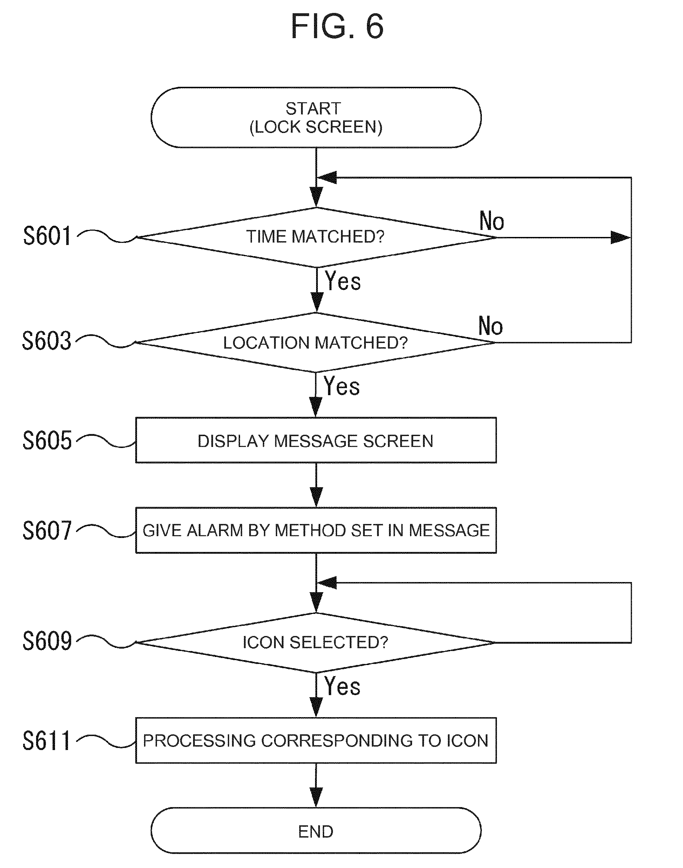

Referring to FIG. 6, a flow of processing at the time of message display by the application 400 according to the embodiment will be described below. At the start of a flowchart in FIG. 6, it is assumed that a message has been already received and the lock screen provided by the OS 300 is displayed on the display unit 180. Further, the description will be made on the assumption that the display time, the display location, and the alarm means are all set in the message related to the processing in FIG. 6. However, the present invention is not limited thereto, and only some of these conditions may be set.

Note that each processing step to be described below can be executed by changing the order arbitrarily or executed in parallel within such a scope that does not cause any contradiction in the processing content. Any other step may also be added between respective processing steps. Further, a step described as one step for convenience sake can be divided into two or more steps and executed, or steps described as two or more steps for convenience sake can be executed as one step.

The popup display section 430 acquires the current time from the time acquisition section 460, and determines whether the current time matches the display time set in the received message (S601). When the current time is not the set display time (No in S601), the popup display section 430 waits for the time. Further, the popup display section 430 acquires the current location from the location acquisition section 450, and determines whether the current location matches the display location set in the received message (S603). When the current location does not match the set display location (i.e., when the current location is not close to the set display location to be regarded to be matched), the popup display section 430 returns to S601.

When the current time and the current location match the display time and the display location set in the received message (Yes in S603), the popup display section 430 has the display unit 180 display the message on the display screen illustrated as the specific example in FIG. 3.

Further, when the alarm means is set in the message, the alarm section 470 reads, from the storage device 120, the alarm sound data 121 and/or the alarm vibration data 123 corresponding to the designated method to instruct the audio output unit 145 and/or the vibration generation unit 160 to give notice based on these data.

After that, when the user operates any icon 30 for functional linkage, the functional linkage section 480 invokes a function corresponding to the operated icon 30.

### (5. Effect of the Embodiment)

As described above, in the information processing terminal 100 of the embodiment, a message in which the display location, the display time, and the alarm method are designated can be transmitted and a display of the message according to these settings can be provided to the user. Thus, it is possible to provide a message display such as to display a message that you picks up some milk when passing by a supermarket or to display a message that you reach a station when you have arrived at the station.

### (6. Supplementary Note)

Note that the above-mentioned configurations of the embodiment may be combined or some components may be replaced. Further, the configuration of the present invention is not limited to the aforementioned embodiment, and various changes may be made without departing from the scope of the present invention.

### Reference Numerals

1...communication system, 30...icon, 100...information processing terminal, 110...main control unit, 111...CPU, 113...memory, 120...storage device, 121...alarm sound data, 123...alarm vibration data, 125...address book data, 130...radio communication unit, 140...audio input unit, 145...audio output unit, 150...time-keeping unit, 160...vibration generation unit, 170...input unit, 180...display unit, 190...sensor, 191...acceleration sensor, 193...GPS receiver, 300...OS, 400...application, 410...message sending/receiving section 420...outgoing message display section 430...popup display section 440...address book setting section 450...location acquisition section 460...time acquisition section 470...alarm section 480...functional linkage section, 500...another application, N...public network

## Claims

1. A program for causing an information processing terminal to execute:
a reception function that receives a message transmitted from another information processing terminal and in which a display location is set;
a first acquisition function capable of acquiring current location information indicative of a current location; and
a display control function which, when the current location information corresponds to the display location set in the message, displays, on a display unit, a screen where the message and an icon for placing a phone call to a phone number corresponding to a sender of the message are arranged on a lock screen provided by an operating system,
wherein when an operation on the icon for placing the phone call is input, the program controls to place the phone call to the phone number corresponding to the sender of the message is performed without a lock canceling operation.

2. The program according to claim 1, further executing:
a setting function capable of setting a message display method for each sender,
wherein the display control function displays, on the lock screen, the message sent from a sender for which it is set to display any message even at locking time.

3. The program according to claim 1 or 2, further executing:
a second acquisition function capable of acquiring time information indicative of a current time, wherein
a display time can be set in the message together with the display location, and
the display control function displays the message on the display unit when the current location corresponds to the display location set in the message and the current time corresponds to the display time set in the message.

4. The program according to any one of claims 1 to 3, wherein the display control function displays an icon for sending a reply to the sender of the message together with the message.

5. The program according to any one of claims 1 to 4, further comprising
an alarm function capable of giving an alarm by vibration or sound, wherein
an alarm method can be set in the message, and
at the time of displaying the message, the alarm function gives an alarm by a method set in the message.

6. An information processing terminal comprising:
reception means for receiving a message transmitted from another information processing terminal and in which a display location is set;
acquisition means capable of acquiring current location information indicative of a current location; and
display control means which, when the current location information corresponds to the display location set in the message, displays, on a display unit, a screen where the message and an icon for placing a phone call to a phone number corresponding to a sender of the message are arranged on a lock screen provided by an operating system,
wherein when an operation on the icon for placing the phone call is input, the information processing terminal controls to place the phone call to the phone number corresponding to the sender of the message is performed without a lock canceling operation.

7. An information processing method for causing an information processing terminal to execute:
a step of receiving a message transmitted from another information processing terminal and in which a display location is set;
a step of acquiring current location information indicative of a current location; and
a step in which, when the current location information corresponds to the display location set in the message, a screen where the message and an icon for placing a phone call to a phone number corresponding to a sender of the message are arranged on a lock screen provided by an operating system is displayed on a display unit,
wherein when an operation on the icon for placing the phone call is input, the information processing terminal controlling to place the phone call to the phone number corresponding to the sender of the message is performed without a lock canceling operation.
